# EUROPEAN PATENT APPLICATION

(11) **EP 2 034 319 A2**
(43) Date of publication of application: **11.03.2009**
(21) Application number: 08163823.1
(22) Date of filing: 05.09.2008
(51) Int. Cl.: G01N 35/10, G01N 35/00, G01N 33/543

(54) **Separation Apparatus**

(30) Priority: 07.09.2007 GB 0717461
(71) Applicant: Mole Genetics AS, 1326 Lysaker (NO)
(72) Inventor: Deggerdal, Arne, N-1326 Lysaker (NO); Norrman, Roland, SE-17263 Sundbyberg (SE); Amerdal, Tomas, SE-17263 Sundbyberg (SE); Engwall, Erik, SE-17263 Sundbyberg (SE); Aström, Jonas, SE-17263 Sundbyberg (SE); Forsgren, Per-Ola, SE-17263 Sundbyberg (SE)
(74) Representative: Daniels, Jeffrey Nicholas

(57) **Abstract**

Provided is an apparatus for automated separation of a target compound from a sample using magnetic particles, which apparatus comprises a pipette head assembly for dispensing liquid through one or more pipette tips attachable thereto to one or more vials and a magnetic rod which is movable within the apparatus to a position adjacent to the one or more vials for attracting the magnetic particles; wherein the pipette head assembly has a pipette tip ejector for ejecting the one or more pipette tips from the pipette head assembly; and wherein the pipette tip ejector is operable by the magnetic rod.

## Description

The present invention relates to apparatus for automated separation of a target compound from a sample using magnetic particles and a method for ejecting pipette tips from a pipette head assembly in such apparatus.

Magnetic particles are a useful alternative to separation media traditionally employed in isolating target compounds from chemical or biological samples. This is particularly so in molecular biology where the target compounds may be nucleic acids such as DNA and RNA. The magnetic particles may be organic polymer or silicon based and generally incorporate paramagnetic or ferromagnetic species. Typically, the target compound binds to the magnetic particles to form a suspension of the particles in liquid and this suspension is subjected to a magnetic field so as to separate physically the magnetic particles binding the target compound from the remaining components in a liquid phase.

This type of magnetic separation may be automated. Apparatus is commercially available which includes an automated pipette head assembly movable within the apparatus so that it may be aligned with test tubes or vials for reagent liquid handling. The step of magnetic separation may be performed using a magnetic rod which is also movable within the apparatus for alignment with the test tubes or vials. Apparatus of this type has been made to very high standards of engineering using high quality durable machinery which may be precision manufactured to ensure that operation of the apparatus is reliable. Usually, apparatus of this type includes a dedicated microcomputer to enable programmable control of the processes which the apparatus must perform. Such apparatus is generally expensive to purchase and may require specialist service contracts for maintenance.

In operation, the pipette head assembly has to pick up disposable pipette tips, often on more than one occasion. The pipette head assembly may be mounted on a moveable mounting driven by motors in both horizontal and vertical directions. Typically, the pipette head assembly picks up pipette tips in a vertical downwards movement so as to push-fit downwardly depending cones or nozzles of the pipette head assembly into the openings at the top of corresponding pipette tips. This is necessarily a tight fit so as to ensure that the pipette tips do not disengage and so that reagent leakage does not occur. After use, the pipette tips must be disposed of.

Various ways are known for ejecting or discarding tips from automated separation apparatus. In one arrangement, the pipette head assembly is provided with a tip ejector plate which is operated by dedicated mechanics and electronics. Additional parts are provided in the pipette head assembly to push the pipette tips off. An additional motor may be provided for this purpose, which may be controlled by the dedicated microcomputer. In a further arrangement, the tip ejector plate may be moved by the mechanics and electronics that are used for pipetting. In this arrangement there is a need to use stronger motors and a longer stroke length than would be necessary for the pipetting action alone. Both of these arrangements involve extra mechanical parts or modifications to the pipette head assembly which are often expensive and provide a pipette head assembly which is more complex, thereby increasing the likelihood of failure. An example of such an arrangement is shown in USS 139744.

As an alternative to modifications to the pipette head assembly, a keyhole system has been developed in some apparatus which holds down the tips while the pipette head assembly is lifted. Whilst this avoids the need for modification to the pipette head assembly, tip release can only take place at a fixed location and the keyhole system requires an expensive modification to the apparatus as a whole.

A mobile keyhole system has been developed in separation apparatus based on US5702950. In this arrangement, magnetic separation is carried out in the pipette itself. A magnet assembly is linked to the pipette head assembly so as to constitute a mobile keyhole system that will automatically follow the pipette head's horizontal movements. This system overcomes the need for dedicated or extensively modified parts, but only if magnetic separation is performed in the pipette tips and not in tubes placed on the work surface.

The present invention addresses the problem of providing means for ejecting pipette tips from a pipette head assembly in automated separation apparatus which do not suffer from the drawbacks of the prior art arrangements.

Accordingly, in a first aspect, the present invention provides apparatus for automated separation of a target compound from a sample using magnetic particles, which apparatus comprises a pipette head assembly for dispensing liquid through one or more pipette tips attachable thereto to one or more vials and a magnetic rod which is movable within the apparatus to a position adjacent to the one or more vials for attracting the magnetic particles; wherein the pipette head assembly has a pipette tip ejector for ejecting the one or more pipette tips from the pipette head assembly; and wherein the pipette tip ejector is operable by the magnetic rod.

According to a second aspect, the present invention provides a method for ejecting pipette tips from a pipette head assembly in an apparatus for automated separation of a target compound from a sample using magnetic particles, which method comprises providing the pipette head assembly with a pipette tip ejector for ejecting one or more pipette tips from the pipette head assembly, and operating the pipette tip ejector with a moveable magnetic rod which is additionally used to attract the magnetic particles during target compound separation.

The present invention avoids the complexities introduced in prior art arrangements and instead provides a simple, inexpensive means for ejecting pipette tips from the pipette head assembly of automated magnetic separation apparatus. This is achieved by using the ability of the magnetic rod to move within the apparatus additionally to operate the pipette tip ejector. The magnetic rod may be moved to a position whereby force on the pipette tip ejector is provided by the magnetic rod so as to eject the pipette tips. Typically, the pipette tip ejector comprises means for pushing the one or more pipette tips off of the pipette head assembly. Such means may be operated by engagement of the magnetic rod with the pipette tip ejector, which typically has a contact point for this engagement so as to push the one or more pipette tips off of the pipette head assembly. The contact point may be provided by a projection from the pipette ejector, such as an integral projection or a removeable projection such as a screw.

Typically, the pipette head assembly comprises one or more nozzles for locating the one or more pipette tips, usually by push-fitting the nozzles into the openings at the top of the corresponding pipette tips so that the inner surface of the top of the pipette tips fits tightly over the outer surface of the corresponding nozzles. It is preferred that the means for pushing the one or more pipette tips off of the pipette head assembly comprises a member moveable adjacent to the one or more nozzles for pushing the one or more pipette tips off of the one or more nozzles. The moveable member preferably comprises a tip ejector body which is moveable adjacent to the one or more nozzles in a direction parallel with the longitudinal axis thereof. The tip ejector body preferably has a complementary surface to the longitudinal surface of the one or more nozzles. For example, where the nozzles have a substantially circular radial cross-section, the tip ejector body may have a complementary surface which also has a circular or semicircular cross section to provide a close fit with the nozzles. Preferably, the radius of this cross-section is only slightly larger than the radius of the longitudinal surface of the one or more nozzles. Most preferably, the complementary surface of the tip ejector body comprises an interior surface of one or more channels or holes in the tip ejector body through which the one or more nozzles slideably fit.

In a preferred embodiment, at least one guide pin is provided in the pipette head assembly for guiding the movement of the pipette tip ejector. This ensures that the tip ejector body travels accurately and securely during the operation of pipette tip ejection. The at least one guide pin may be attached to the pipette tip ejector and may include resilient means such as a spring, for returning the pipette tip ejector to a resting position following ejection of the one or more pipette tips. Preferably two guide pins are provided, one at each side of the pipette head assembly.

The invention will now be described in further detail, by way of example only, with reference to the accompanying drawings, in which:
FIGURE 1 shows a perspective view of apparatus according to the present invention;
FIGURE 2 shows a perspective view of a pipette head assembly for use in the present invention, with and without pipette head cover;
FIGURE 3 shows a perspective view of pipette head assembly without the pipette head cover in three stages of pipette tip release; and
FIGURE 4 shows a side view of the pipette head assembly depicted in Figure 3.

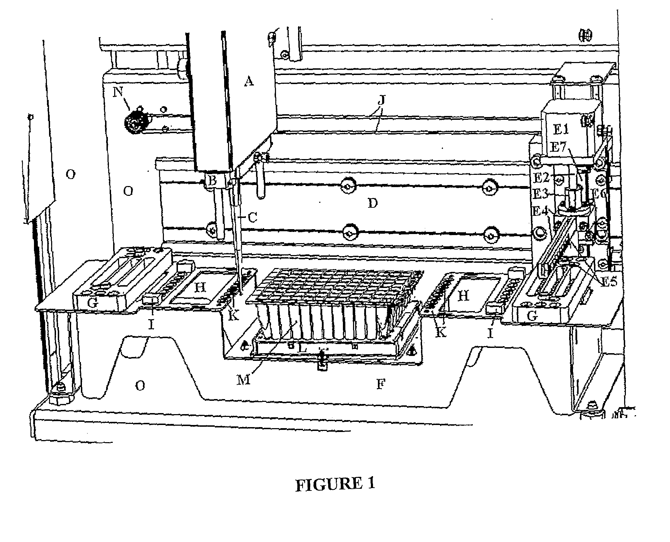

Figure 1 shows the principal features of the apparatus according to a specific embodiment of the invention. Instrument frame O generally forms part of a cabinet for laboratory bench top use. Work surface tray F is made of stainless steel and provides a surface for mounting or positioning various other elements of the apparatus. Pipette storage plate G enables storage of pipette tips. A holder for elution tubes I is provided adjacent the pipette tip storage plate. A waste box position H enables waste to be disposably located therein. Positions for sample tubes K are provided adjacent the waste box position. A series of reagent strips M are seated on base plate L. The base plate is positioned on the work surface tray by means of protruding cones. Further positions for sample tubes K, holder for elution tubes I and pipette tip storage plate G are provided.

Pipette head assembly A is movable horizontally and vertically. Horizontal movement is achieved by attachment of the assembly to rails along the back wall of the apparatus frame and the assembly is driven by a drive belt powered by a motor (not shown). Vertical movement is achieved by mounting the head on a threaded axle which is driven by a further motor. A pipette tip ejector is provided on the pipette head and the head is shown in the Figure with a single disposable pipette tip. The pipette head may attach a plurality of disposable pipette tips.

The magnetic rod E4 comprises a standard aluminium rod to which are secured magnets E5. The magnets are seated in holes in the aluminium rod and are attached to a flat steel rod (not shown) which sits in a groove in the aluminium rod. Module carriage E6 provides a mounting for magnetic rod E4 and motor E1. At the end of the magnetic rod proximal to the module carriage E6 is provided a small carriage part slidably mounted on vertical rail E7. Motor E1 drives threaded axle E2, which passes through nut E3 fixed to the small carriage part of the magnetic rod to provide vertical movement on the vertical rail E7. Module carriage E6 is mounted for horizontal movement along the horizontal rail to enable the entire assembly including magnetic rod E4 and motor E1 to move horizontally. Drive belt J turns over a free pulley N on one side and over a pulley fixed to the axle of the motor on the other side (not shown) to provide horizontal movement along the rail.

During operation, pipette tips C are filled with liquid in order to transport liquid between the wells of the reagent strip M. The mechanical parts that are responsible for aspirating liquid into the tips are found in the pipette head assembly A. The pipette tips themselves are disposable. Pipette tips are attached to the pipette head assembly by pressing the pipette head cones into the pipette tips placed in the tip storage plate G. To release used tips from the cones, the tip ejector B has to be pushed down relative to the pipette head assembly A. To avoid adding dedicated parts for this purpose, the present invention uses the magnetic rod E4. The magnetic rod E4 slides vertically on a rail E7 and is driven up and down the rail by motor E1. The rail and motor are fixed to a carriage E6 that can move horizontally along another rail D. A system analogous to the one described above for the magnets is used to position the pipetting head.

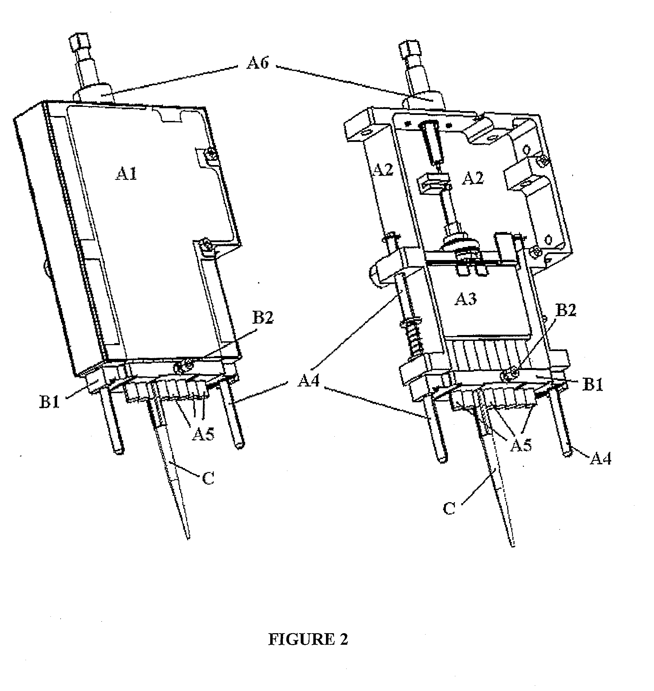

Figure 2 shows a more detailed perspective view of the pipette head assembly with and without the pipette head cover A1. One disposable pipette tip C is attached to the third pipette head cone from the left. Pipette head holder A2 houses the pipette head A3 in which is contained pipette barrels and piston assemblies. Pipette head cones A5 extend from the pipette barrels in fluid communication therewith. The piston is driven by pipette motor A6. Spring loaded guide pins A4 are situated at each side of the pipette head holder A2.

The pipette head cones A5 pass through holes in the tip ejector body B1. These holes have a smaller diameter than the outer diameter of the disposable pipette tip C. When the tip ejector body B1 is moved down along the pipette head cones, it will therefore push the tips off the cones. When the tips have been pushed so far down along the cones that they no longer fit tightly onto the cones, they will fall off. The tip ejector body is fixed to spring loaded guide pins A4 that pass through flange bearings in the pipette head housing. These guide pins not only guide the movement of the tip ejector body, but their spring loading ensures that the tip ejector body automatically returns to its home position as soon external downwards pressure is removed. At each side of the tip ejector body is a screw, the tip ejector contact screw B2, that provides a contact point where the magnetic rod can push down on the tip ejector.

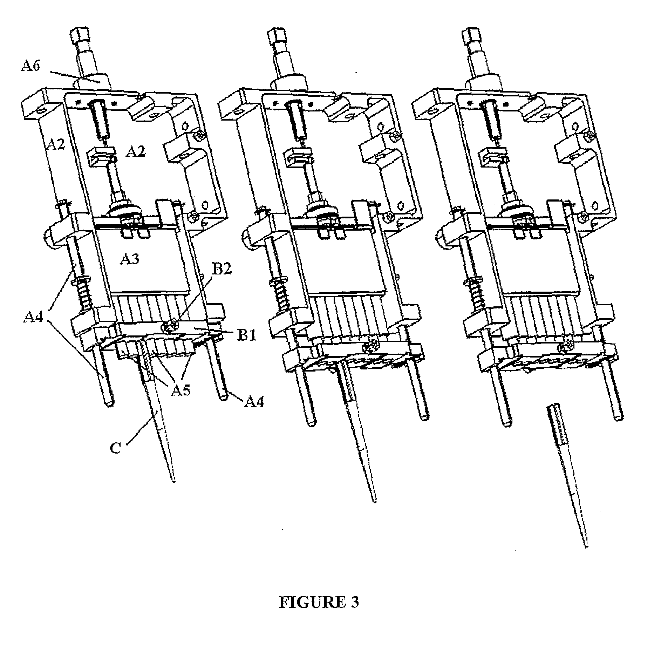

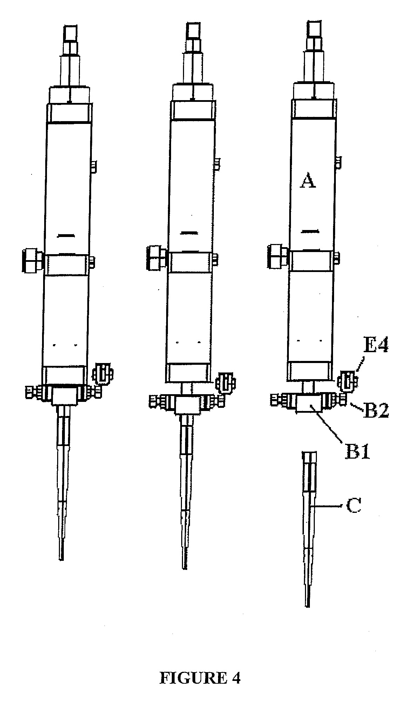

Figure 3 shows the sequence of events during tip release. In the left hand Figure, the pipette C is attached to the pipette head cone A5 and the tip ejector body B1 is in its home resting position. In the middle Figure, the tip ejector body B1 has moved down, having been driven by the magnetic rod pushing on the tip ejector contact screw B2. At this stage in the process, the disposable pipette tip C has been pushed off the pipette head cone A5. In the right hand Figure, the pipette tip starts to fall away, being no longer attached to the pipette head cone. The magnetic rod is not shown in this Figure since it would obscure the view of the pipette head assembly. Figure 4 shows from the side the same sequence of events as shown in Figure 3. In this Figure it is shown how the magnetic rod E4 presses down on the tip ejector contact screw B2. The guide pins A4 are not shown in this Figure.

## Claims

1. Apparatus for automated separation of a target compound from a sample using magnetic particles, which apparatus comprises a pipette head assembly for dispensing liquid through one or more pipette tips attachable thereto to one or more vials and a magnetic rod which is movable within the apparatus to a position adjacent to the one or more vials for attracting the magnetic particles; wherein the pipette head assembly has a pipette tip ejector for ejecting the one or more pipette tips from the pipette head assembly; and wherein the pipette tip ejector is operable by the magnetic rod.

2. Apparatus according to claim 1, wherein the pipette tip ejector comprises means for pushing the one or more pipette tips off of the pipette head assembly.

3. Apparatus according to claim 2, wherein the pipette head assembly comprises one or more nozzles for locating the one or more pipette tips and the means for pushing the one or more pipette tips off of the pipette head assembly comprises a member moveable adjacent to the one or more nozzles for pushing the one or more pipette tips off of the one or more nozzles.

4. Apparatus according to claim 3, wherein the moveable member comprises a tip ejector body which has a complementary surface to the surface of the one or more nozzles.

5. Apparatus according to claim 4, wherein the complementary surface of the tip ejector body comprises an interior surface defining one or more channels through which the one or more nozzles slideably fit.

6. Apparatus according to any one of claims 2 to 5, wherein the pipette tip ejector has a contact point for engagement with the magnetic rod so as to push the one or more pipette tips off of the pipette head assembly.

7. Apparatus according to claim 6, wherein the contact point is provided by a projection from the pipette tip ejector.

8. Apparatus according to any one of claims 2 to 7 wherein the pipette head assembly has at least one guide pin for guiding the movement of the pipette tip ejector.

9. Apparatus according to claim 8, wherein the at least one guide pin is attached to the pipette tip ejector and includes resilient means for returning the pipette tip ejector to a resting position following ejection of the one or more pipette tips.

10. A method for ejecting pipette tips from a pipette head assembly in an apparatus for automated separation of a target compound from a sample using magnetic particles, which method comprises providing the pipette head assembly with a pipette tip ejector for ejecting one or more pipette tips from the pipette head assembly, and operating the pipette tip ejector with a moveable magnetic rod which is additionally used to attract the magnetic particles during target compound separation, wherein the pipette tip ejector preferably comprises means for pushing the one or more pipette tips off of the pipette head assembly.

11. A method according to claim 10, wherein the pipette head assembly comprises one or more nozzles for locating the one or more pipette tips and the means for pushing the one or more pipette tips off of the pipette head assembly comprises a member moveable adjacent to the one or more nozzles for pushing the one or more pipette tips off of the one or more nozzles, wherein the moveable member preferably comprises a tip ejector body which has a complementary surface to the surface of the one or more nozzles.

12. A method according to claim 11, wherein the complementary surface of the tip ejector body comprises an interior surface defining one or more channels through which the one or more nozzles slideably fit.

13. A method according to any one of claims 10 to 12, wherein the pipette tip ejector has a contact point for engagement with the magnetic rod so as to push the one or more pipette tips off of the pipette head assembly, wherein the contact point is preferably provided by a projection from the pipette tip ejector.

14. A method according to any one of claims 10 to 13 wherein the pipette head assembly has at least one guide pin for guiding the movement of the pipette tip ejector.

15. A method according to claim 14, wherein the at least one guide pin is attached to the pipette tip ejector and includes resilient means for returning the pipette tip ejector to a resting position following ejection of the one or more pipette tips.
